Europäisches Patentamt

(19) European Patent Office

Office européen des brevets

(11) EP 0 733 926 A2

(12) EUROPEAN PATENT APPLICATION

(43) Date of publication:
25.09.1996 Bulletin 1996/39

(51) Int. Cl.$^6$: G02F 1/015

(21) Application number: 96104610.9

(22) Date of filing: 22.03.1996

(84) Designated Contracting States:
BE DE DK ES FR GB IT LU NL SE

(30) Priority: 24.03.1995 JP 65638/95
14.02.1996 JP 26367/96

(71) Applicant: MATSUSHITA ELECTRIC INDUSTRIAL
CO., LTD.
Kadoma-shi, Osaka 571 (JP)

(72) Inventors:
• Nakamura, Shinji
Ikoma-shi, Nara 630-01 (JP)

• Kamiyama, Satoshi
Sanda-shi, Hyogo 669-13 (JP)
• Matsui, Yasushi
Neyagawa-shi, Osaka 572 (JP)

(74) Representative: Grünecker, Kinkeldey,
Stockmair & Schwanhäusser
Anwaltssozietät
Maximilianstrasse 58
80538 München (DE)

(54) **Electric field absorption type semiconductor light modulator**

(57)   An electric field absorption type semiconductor light modulator comprises an active layer having a multi quantum well structure in which a plurality of well layers and a plurality of barrier layers are formed sequentially, the peaks of the PL wavelengths of the plurality of well layers being set shorter than the wavelength of signal light by 0.1μm or more, thereby enhancing the linearity of the applied voltage - quenching ratio characteristic.

In another embodiment, the plurality of well layers may be formed by the combination of well layers having different PL wavelengths (45,47). Consequently, it is possible to realize the combination of the well layer having the convex applied voltage - quenching ratio characteristic and the well layer having the concave applied voltage - quenching ratio characteristic.

FIG. 8

Printed by Rank Xerox (UK) Business Services
2.13.5/3.4

EP 0 733 926 A2

**Description**

BACKGROUND OF THE INVENTION

The present invention relates to the technology in which the modulation distortion of an electric field absorption type semiconductor light modulator used for optical communication is reduced.

In the field of optical communication, signal light having 1.3 μm and 1.55 μm bands has mainly been used. In these wavelength bands, the electric field absorption type semiconductor light modulator has advantages of smaller wavelength chirping, high-speed modulation and the like and is effective in the high-speed modulation of the optical communication as compared with a direct modulation type semiconductor laser. The electric field absorption type semiconductor light modulator has a simple structure so that it can be integrated with other optical semiconductor parts such as a DFB laser.

An electric field absorption type semiconductor light modulator used for the 1.55 μm band will be described below as the prior art.

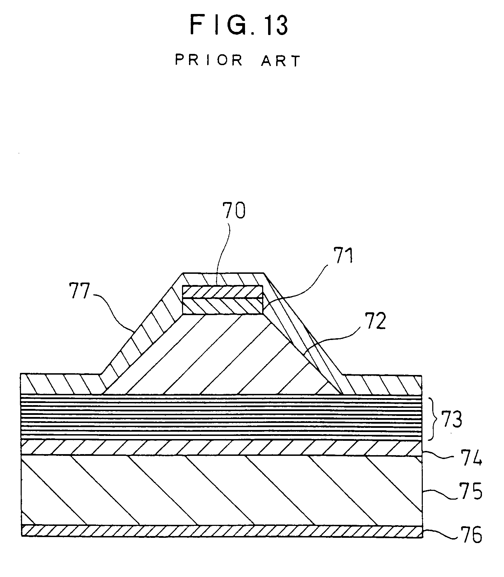

Fig. 13 shows the sectional structure of an electric field absorption type semiconductor light modulator according to the prior art. In Fig. 13, 70 designates a first electrode layer made of Au/Zn, 71 designates a p type InGaAsP layer, 72 designates a first clad layer made of p type InP, 73 designates a MQW (Multi Quantum Well) layer made of InGaAsP or InGaAs, 74 designates a light waveguide layer made of n type InP, 75 designates a second clad layer made of n type InP, 76 designates a second electrode layer made of Au/Sn, and 77 designates a SiN layer. The first electrode layer 70 is electrically connected to a pad type electrode of 70 μm square (not shown) formed on the SiN layer 77. The element length of the electric field absorption type semiconductor light modulator is 250 μm.

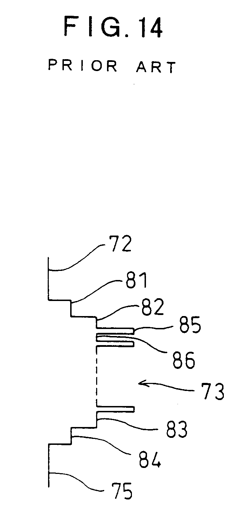

Fig. 14 is a conceptual diagram showing, in a photoluminescence wavelength (hereinafter referred to as a PL wavelength), the layer structure of composition of the MQW layer 73 of the electric field absorption type semiconductor light modulator according to the prior art, wherein the first and second clad layers 72 and 75 are the same as in Fig. 13. In Fig. 14, 81 designates a first light waveguide layer made of InGaAsP which has a PL wavelength of 1.05 μm and a thickness of 50 nm, 82 designates a second light waveguide layer made of InGaAsP which has a PL wavelength of 1.15 μm and a thickness of 20 nm, 83 designates a third light waveguide layer having the same composition and thickness as those of the second light waveguide layer 82, and 84 designates a fourth light waveguide layer having the same composition and thickness as those of the first light waveguide layer 81. The first and second light waveguide layers 81 and 82, and the third and fourth light waveguide layers 83 and 84 form 2-stage SCH structures respectively. In Fig. 14, 85 designates a well layer made of InGaAsP which has a PL wavelength of 1.51 μm and a thickness of 7nm, and 86 designates a barrier layer having a PL wavelength of 1.15 μm and a thickness of 10 nm. The 10 well layers 85 and 9 barrier layers 86 are alternately formed on the MQW layer 73.

When an electric field is applied to the electric field absorption type semiconductor light modulator having the above structure in such a manner that the first electrode layer 70 side is positive and the second electrode layer 76 side is negative, electric field absorption effects occur on the MQW layer 73 so that the quenching ratio of signal light which guides the waves of the electric field absorption type semiconductor light modulator is decreased. The quenching ratio is expressed by (the waveguide loss of the electric field absorption type semiconductor light modulator) / (the waveguide loss of the electric field absorption type semiconductor light modulator obtained when an applied voltage is 0 V). The waveguide loss is expressed by (the intensity of light emitted from the emitting end face of the electric field absorption type semiconductor light modulator) / (the intensity of light which is optically coupled to a waveguide path on the incident end face of the electric field absorption type semiconductor light modulator).

The well layer 85 has a PL wavelength of 1.51 μm whose peak is almost the same as the wavelength 1.55 μm of the signal light. The reason is that the efficiency of the applied voltage - quenching ratio characteristic should be compatible with an insertion loss for the signal light having a wavelength of 1.55 μm. The insertion loss means the waveguide loss of the electric field absorption type semiconductor light modulator obtained when the applied voltage is 0 V.

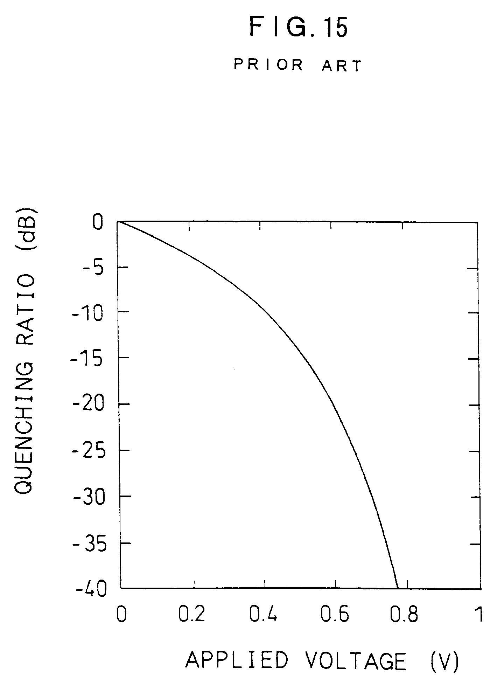

Fig. 15 shows the applied voltage - quenching ratio characteristic of the electric field absorption type semiconductor light modulator according to the prior art. As shown in Fig. 15, the quenching ratio is -40 dB when the applied voltage is 0.79 V.

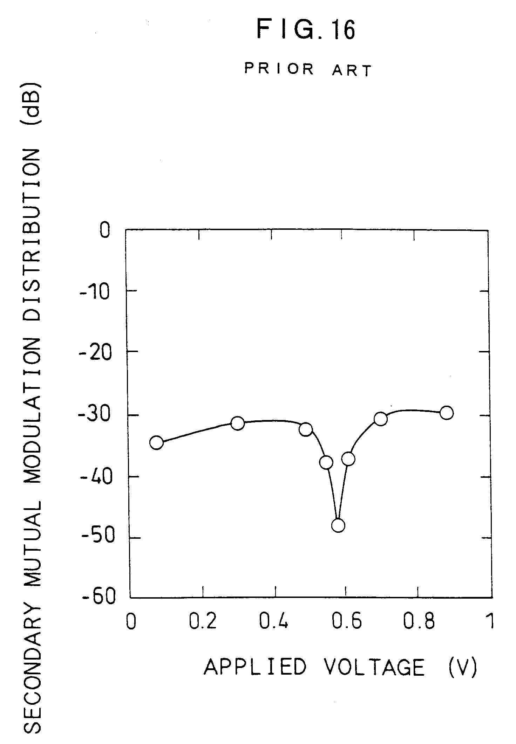

Fig. 16 shows the relationship between the secondary mutual modulation distortion and the applied voltage of the electric field absorption type semiconductor light modulator according to the prior art. A modulation degree is 5 %. As shown in Fig. 16, the secondary mutual modulation distortion is comparatively low in the vicinity of the applied voltage of 0.57 V, and has a minimum value of -50 dB. In areas other than an area where the applied voltage is 0.57 V, the secondary mutual modulation distortion is -35 dB to -29 dB.

As shown in Fig. 16, the secondary mutual modulation distortion of the electric field absorption type semiconductor light modulator according to the prior art is at least -50 dB. In order to increase the speed of modulation, it is necessary to reduce a non-linear distortion.

2

Referring to the electric field absorption type semiconductor light modulator according to the prior art, an applied voltage area where a secondary mutual modulation distortion of about -50 dB is obtained is very small, and the secondary mutual modulation distortion is deteriorated in applied voltage areas other than the applied voltage area where the secondary mutual modulation distortion of -50 dB is obtained. Consequently, the degree of design freedom of a system in which the electric field absorption type semiconductor light modulator according to the prior art is incorporated is considerably reduced.

In case of NRZ modulation or SCM modulation, these problems become serious. In particular, when the electric field absorption type semiconductor light modulator should be applied to the SCM modulation, the above problems are the greater requirements to be met.

## SUMMARY OF THE INVENTION

In consideration of the foregoing, it is an object of the present invention to provide an electric field absorption type semiconductor light modulator wherein the secondary mutual modulation distortion of the applied voltage - quenching ratio characteristic is reduced and a non-linear distortion having the low applied voltage - quenching ratio characteristic is obtained with a greater modulation degree in a larger applied voltage area.

It has been found that the linearity of the applied voltage - quenching ratio characteristic can be enhanced if the peak of the PL wavelength (photoluminescence wavelength) of a well layer having a multi quantum well structure is set shorter than the wavelength of signal light by 0.1 $\mu$m or more. Based on the foregoing, a first electric field absorption type semiconductor light modulator according to the present invention has been provided.

More specifically, the first electric field absorption type semiconductor light modulator comprises an active layer having a multi quantum well structure in which a plurality of well layers and a plurality of barrier layers are formed sequentially, the peaks of the PL wavelengths of the plurality of well layers being set shorter than the wavelength of signal light by 0.1 $\mu$m or more, thereby enhancing the linearity of the applied voltage - quenching ratio characteristic.

According to the electric field absorption type semiconductor light modulator having a multi quantum well structure in which the peaks of the PL wavelengths of the plurality of well layers are set shorter than the wavelength of the signal light by 0.1 $\mu$m or more, Stark effect does not contribute to the absorption of the signal light. Consequently, there is a continuous applied voltage area where K (V) = $\alpha''(V) / \alpha'(V)2$ is almost constant (wherein $\alpha$ is an absorption coefficient of signal light, V is an applied voltage, $\alpha''(V)$ is a second order differential, and $\alpha'(V)$ is a first order differential). For this reason, $\Gamma$L is optimized (wherein $\Gamma$ is an optical confinement coefficient of a waveguide path and L is a waveguide path length) so that a secondary mutual modulation distortion can be reduced. Accordingly, a non-linear distortion having the low applied voltage - quenching ratio characteristic can be obtained with a greater modulation degree in a larger applied voltage area.

It has been found that well layers having the convex and concave applied voltage - quenching ratio characteristic are combined so that the linearity of the applied voltage - quenching ratio characteristic can be enhanced. Based on the foregoing, a second field effect absorption type semiconductor light modulator according to the present invention has been provided.

More specifically, the second electric field absorption type semiconductor light modulator comprises an active layer having a multi quantum well structure in which a plurality of well layers and a plurality of barrier layers are formed sequentially, the plurality of well layers being formed by the combination of the well layer having the convex applied voltage - quenching ratio characteristic and the well layer having the concave applied voltage - quenching ratio characteristic, thereby enhancing the linearity of the applied voltage - quenching ratio characteristic. In this case, the well layers having the convex and concave applied voltage - quenching ratio characteristic may be combined in all applied voltage areas. Furthermore, the well layer having the convex applied voltage - quenching ratio characteristic in one of the areas and the concave applied voltage - quenching ratio characteristic in other areas may be combined with the well layer having the concave applied voltage - quenching ratio characteristic in one of the areas and the convex applied voltage - quenching ratio characteristic in other areas.

According to the second electric field absorption type semiconductor light modulator, the convex portion of the applied voltage - quenching ratio characteristic is offset by the concave portion of the applied voltage - quenching ratio characteristic. Consequently, a non-linear distortion having the low applied voltage - quenching ratio characteristic can be obtained with a greater modulation degree in a larger applied voltage area.

According to the second electric field absorption type semiconductor light modulator, the plurality of well layers may be formed by the combination of well layers having different PL wavelengths in the direction of the thickness of the multi quantum well structure. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of well layers may be formed by the combination of well layers having different PL wavelengths in the direction of a waveguide path. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of well layers may be formed by the combination of well layers having different thicknesses in the direction of the thickness of the multi quantum well structure. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of barrier layers may be formed by the combination of barrier layers having different thicknesses in the direction of the waveguide path. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of barrier layers may be formed by the combination of barrier layers having different PL wavelengths in the direction of the thickness of the multi quantum well structure. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of barrier layers may be formed by the combination of barrier layers having different PL wavelengths in the direction of the waveguide path. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of barrier layers may be formed by the combination of barrier layers having different thicknesses in the direction of the thickness of the multi quantum well structure. Consequently, it is possible to realize the combination of the well layer having the convex applied voltage - quenching ratio characteristic and the well layer having the concave applied voltage - quenching ratio characteristic.

According to the second electric field absorption type semiconductor light modulator, the plurality of barrier layers may be formed by the combination of barrier layers having different thicknesses in the direction of the waveguide path. Consequently, it is possible to realize the combination of the well layer having the convex applied voltage - quenching ratio characteristic and the well layer having the concave applied voltage - quenching ratio characteristic.

These and other objects, features, aspects and advantages of the present invention will become more apparent from the following detailed description of the present invention when taken in conjunction with the accompanying drawings.

BRIEF DESCRIPTION OF THE DRAWINGS

Figure 1 is a typical diagram showing the case where Stark effect contributes to the absorption of light performed by a MQW-EA modulator;
Figure 2 is a diagram showing the relationship between a voltage V (V) applied to a MQW layer and K (V) expressed in Equation 3;
Figure 3 is a sectional view showing an electric field absorption type semiconductor light modulator according to Example 1 of the present invention;
Figure 4 is a conceptual diagram showing, in a PL wavelength, the layer structure of composition of a MQW layer in the electric field absorption type semiconductor light modulator according to Example 1;
Figure 5 is a diagram showing the applied voltage - quenching ratio characteristic of the electric field absorption type semiconductor light modulator according to Example 1;
Figure 6 is a diagram showing the secondary mutual modulation distortion - applied voltage characteristic of the electric field absorption type semiconductor light modulator according to Example 1;
Figure 7 is a sectional view showing an electric field absorption type semiconductor light modulator according to Example 2 of the present invention;
Figure 8 is a conceptual diagram showing, in a PL wavelength, the layer structure of composition of a MQW layer in the electric field absorption type semiconductor light modulator according to Example 2;
Figure 9 is a diagram showing the secondary mutual modulation distortion - applied voltage characteristic of the electric field absorption type semiconductor light modulator according to Example 2;
Figure 10 is a sectional view showing an electric field absorption type semiconductor light modulator according to Example 3 of the present invention;
Figures 11 (a) and 11 (b) are conceptual diagrams showing, in a PL wavelength, the layer structure of composition of a MQW layer in the electric field absorption type semiconductor light modulator according to Example 3;
Figure 12 is a diagram showing the secondary mutual modulation distortion - applied voltage characteristic of the electric field absorption type semiconductor light modulator according to Example 3;

Figure 13 is a sectional view showing an electric field absorption type semiconductor light modulator according to the prior art;

Figure 14 is a conceptual diagram showing, in a PL wavelength, the layer structure of composition of a MQW layer in the electric field absorption type semiconductor light modulator according to the prior art;

Figure 15 is a diagram showing the applied voltage - quenching ratio characteristic of the electric field absorption type semiconductor light modulator according to the prior art; and

Figure 16 is a diagram showing the secondary mutual modulation distortion - applied voltage characteristic of the electric field absorption type semiconductor light modulator according to the prior art.

DETAILED DESCRIPTION OF THE INVENTION

An electric field absorption type semiconductor light modulator according to a first embodiment of the present invention will be described below.

The electric field absorption type semiconductor light modulator according to the first embodiment of the present invention comprises an active layer having a multi quantum well (MQW) structure in which a plurality of well layers and a plurality of barrier layers are formed sequentially. The peaks of the PL wavelengths of the plurality of well layers are set shorter than the wavelength of signal light by 0.1 $\mu$m or more.

The reason why the modulation distortion of the applied voltage - quenching ratio characteristic of the electric field absorption type semiconductor light modulator can be reduced if the peak of the PL wavelength of the well layer is set shorter than the wavelength of signal light by 0.1 $\mu$m or more will be described below.

The absorption of the signal light performed by a MQW-EA modulator can be considered with respect to Stark effect and other effects.

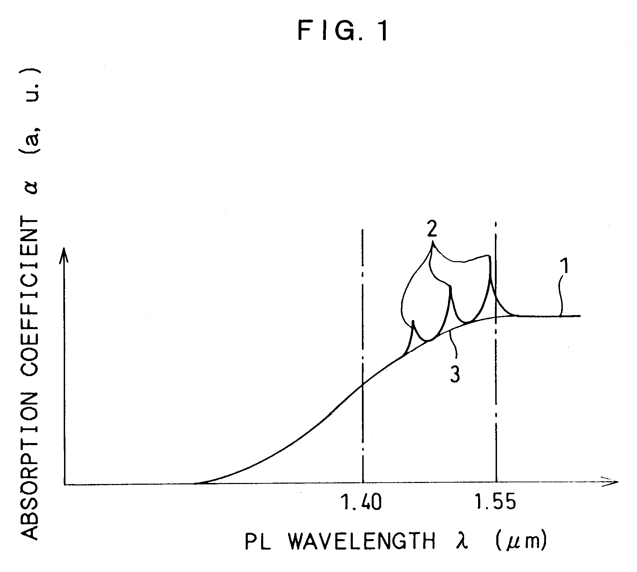

Fig. 1 is a typical diagram showing the case where the Stark effect contributes to the absorption of light performed by the MQW-EA modulator. In Fig. 1, an axis of abscissa designates the PL wavelength of the well layer, and an axis of ordinate designates an absorption coefficient $\alpha$ for the signal light having a wavelength of 1.55 $\mu$m (wherein $\alpha \geq 0$). A heavy line 1 designates the change of the absorption coefficient $\alpha$ for the PL wavelength. A plurality of projections 2 of the heavy line 1 designate the peaks of the absorption coefficient $\alpha$ which appear due to the Stark effect by excitron. A fine line 3 designates the change of the absorption coefficient $\alpha$ which is caused by the phenomenon such as Franz-Keldysh effect other than the Stark effect. A difference between the projection 2 of the heavy line 1 and the fine line 3 means the Stark effect. The Stark effect has a maximum value when the PL wavelength is in the vicinity of 1.55 $\mu$m which is close to the wavelength of the signal light, and is decreased when the PL wavelength is set shorter than the wavelength of the signal light. When the PL wavelength is set shorter than the wavelength of the signal light by 0.1 $\mu$m or more, that is, the PL wavelength is 1.45 $\mu$m or less, the Stark effect hardly contributes to the absorption of the signal light.

The applied voltage - quenching ratio characteristic $T_{Att}$ (V) is expressed by Equation (1):

$$T_{Att}=\exp(-\alpha(V)\Gamma L) \qquad \text{Equation (1)}$$

wherein V is an applied voltage, $\Gamma$ is an optical confinement coefficient of a waveguide path and L is a waveguide path length. A secondary mutual modulation distortion (hereinafter referred to as $IM_2$) is the ratio of a secondary distortion component to a fundamental wave component. The distortion component of $IM_2$ has a value which is proportional to a second order differential coefficient obtained by Taylor's expansion of $T_{Att}$ (V). Accordingly, as $T_{Att}''$ (V) is decreased, $IM_2$ becomes smaller. $T_{Att}''$ (V) is expressed by Equation (2) which is a second order differential of Equation (1).

$$T_{Att}''=\Gamma L(\Gamma L\alpha'(V)^2-\alpha''(V)T_{Att} \qquad \text{Equation (2)}$$

Accordingly,

$$K(V)=\alpha''(V)/\alpha'(V)^2 \qquad \text{Equation (3)}$$

$$D=\int(\Gamma L-K(V))^2 dv \qquad \text{Equation (4)}$$

In this case, it is supposed that the linearity of the applied voltage - quenching ratio characteristic can be enhanced if $\Gamma L$ is optimized in such a manner that D has a minimum value in an operating point area.

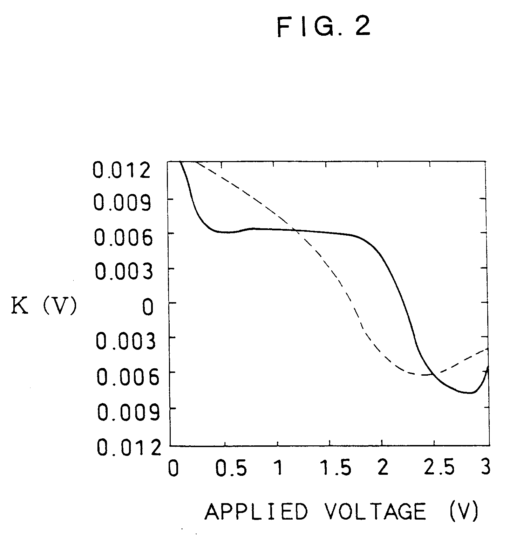

Fig. 2 shows the relationship between a voltage V (V) applied to the MQW layer (an axis of abscissa) and K (V) (an axis of ordinate) expressed in Equation 3. In Fig. 2, a solid line 4 designates K (V) of the MQW layer comprised of a well layer having a PL wavelength of 1.40 $\mu$m to which the Stark effect hardly contributes. A broken line 5 designates K (V) of the MQW layer comprised of a well layer having a PL wavelength of 1.50 $\mu$m to which the Stark effect greatly contributes.

In the case where the Stark effect does not contribute as shown by the solid line 4, the value of K (V) is almost constant in the vicinity of 0.006 when 0.4 < V < 1.8 is formed. Accordingly, if the MQW-EA modulator is designed so as to obtain $\Gamma L$ = 0.006 (cm), D expressed in Equation 4 is decreased so that $IM_2$ is reduced in case of 0.4 < V < 1.8 which is a continuous applied voltage area. In the case where the Stark effect contributes as shown by the broken line 5, there is no applied voltage area where K (V) is constant. Consequently, $IM_2$ cannot be reduced in the continuous applied voltage area irrespective of the design of $\Gamma L$. More specifically, in the case where the Stark effect does not contribute in the MQW-EA modulator, there is the continuous applied voltage area where K (V) is almost constant. Therefore, $\Gamma L$ is optimized so that $IM_2$ can be reduced. In the case where the Start effect contributes, there is no continuous applied voltage area where K (V) is almost constant so that $\Gamma L$ cannot be optimized. Consequently, $IM_2$ cannot be reduced.

The reason why the PL wavelength of the well layer is set shorter than the wavelength of the signal light by 0.1 $\mu$m or more so that the modulation distortion of the applied voltage - quenching ratio characteristic of the electric field absorption type semiconductor light modulator can be reduced will be described below. More specifically, the Stark effect does not contribute to the absorption of the signal light in the MQW-EA modulator having a well layer whose PL wavelength is set shorter than the wavelength of the signal light by 0.1 $\mu$m or more. In the case where the Stark effect does not contribute to the absorption of the signal light, there is the continuous applied voltage area where K (V) is almost constant. Consequently, $\Gamma L$ is optimized so that $IM_2$ can be reduced.

An electric field absorption type semiconductor light modulator according to a first embodiment will be described below.

(Example 1)

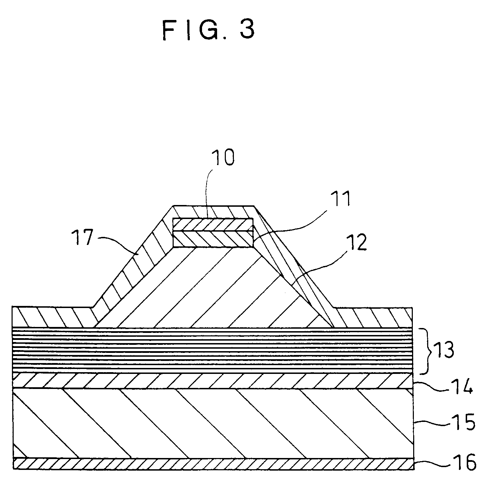

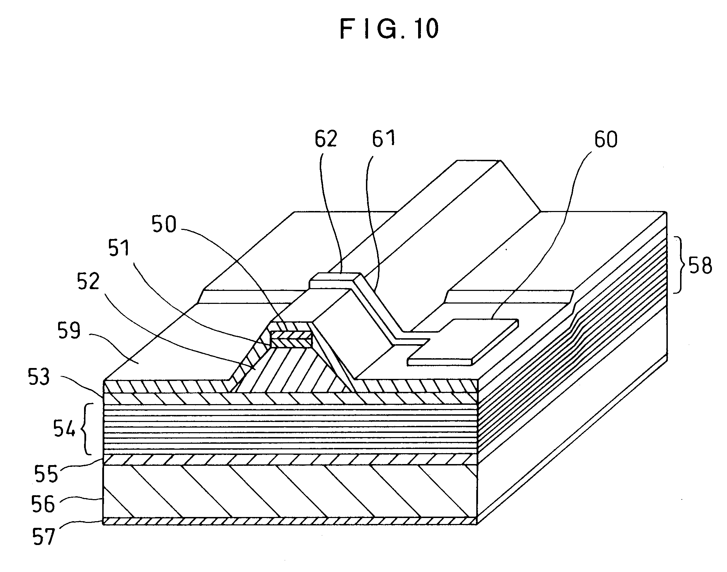

Fig. 3 shows the sectional structure of an electric field absorption type semiconductor light modulator according to Example 1. In Fig. 3, 10 designates a first electrode layer made of Au/Zn, 11 designates a p type InGaAsP layer having a thickness of 1000 $\mu$m, 12 designates a first clad layer made of p type Inp which has a thickness of 9000 $\mu$m, 13 designates a MQW layer made of InGaAsP or InGaAs, 14 designates a buffer layer made of n type InP which has a thickness of 1000 $\mu$m, 15 designates a second clad layer made of n type InP, 16 designates a second electrode layer made of Au/Sn, and 17 designates a SiN film. The first electrode layer 10 is electrically connected to a pad type electrode of 70 $\mu$m square (not shown) formed on the SiN film 17.

The element length of the electric field absorption type semiconductor light modulator according to Example 1 is 250 $\mu$m. An AR coat comprised of a $SiO_2$ film which has a thickness of 1.55 $\mu$m is formed on both end faces of a waveguide path. The $SiO_2$ film is formed on the side of the MQW layer 13.

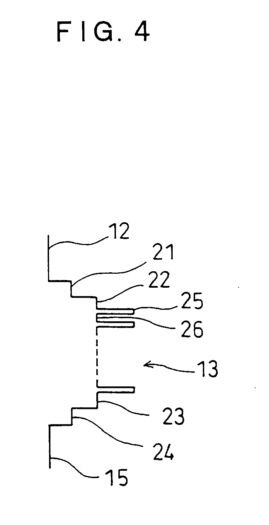

Fig. 4 is a conceptual diagram showing, in a PL wavelength, the layer structure of composition of the MQW layer 13 in the electric field absorption type semiconductor light modulator according to Example 1. First and second clad layers 12 and 15 are the same as in Fig. 3. In Fig. 4, 21 designates a first light waveguide layer made of InGaAsP which has a PL wavelength of 1.05 $\mu$m and a thickness of 50 nm, 22 designates a second light waveguide layer made of InGaAsP which has a PL wavelength of 1.15 $\mu$m and a thickness of 20 nm, 23 designates a third light waveguide layer having the same composition and thickness as those of the second light waveguide layer 22, and 24 designates a fourth light waveguide layer having the same composition and thickness as those of the first light waveguide layer 21. The first and second light waveguide layers 21 and 22, and the third and fourth light waveguide layers 23 and 24 form 2-stage SCH structures respectively.

In Fig. 4, 25 designates a well layer made of InGaAsP which has a PL wavelength of 1.31 $\mu$m and a thickness of 7 nm, and 26 designates a barrier layer having a PL wavelength of 1.15 $\mu$m and a thickness of 10 nm. The 10 well layers 25 and 9 barrier layers 26 are alternately formed on the MQW layer 13.

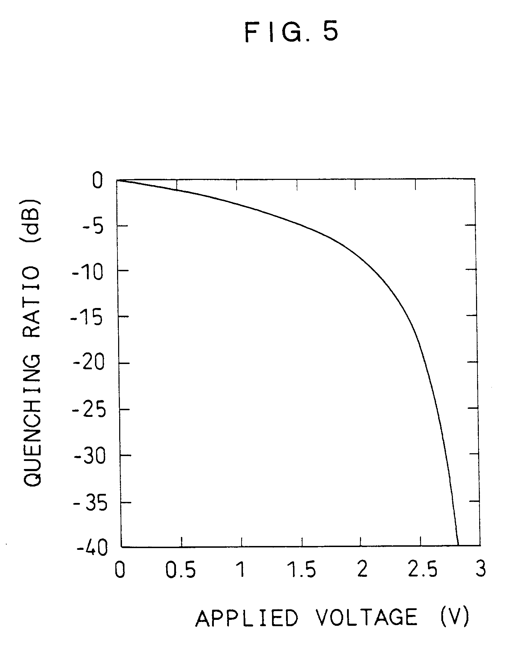

Fig. 5 shows the applied voltage - quenching ratio characteristic obtained when light having a constant intensity and a wavelength of 1.55 $\mu$m is incident on a waveguide path having the above structure and an electric field is applied in such a manner that the first electrode layer 10 is positive and the second electrode layer 16 is negative. As shown in Fig. 5, a quenching ratio of -40 dB is obtained with an applied voltage of 2.57 V. The applied voltage - quenching ratio characteristic is very satisfactory.

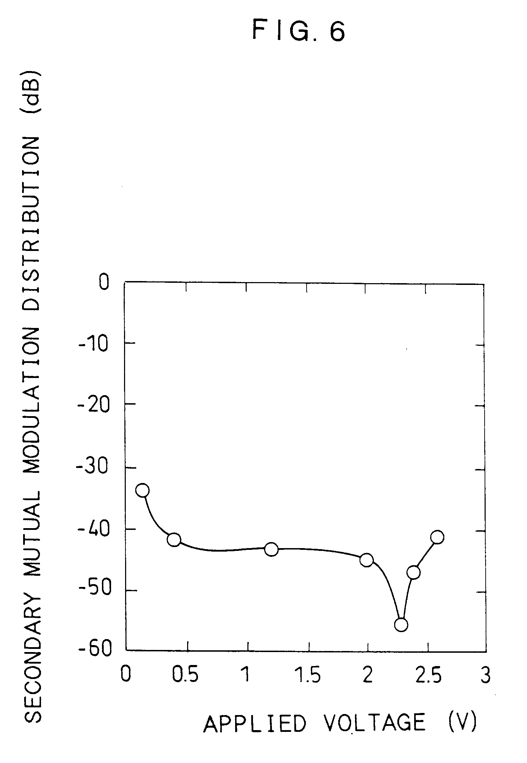

Fig. 6 shows the secondary mutual modulation distortion - applied voltage characteristic of the electric field absorption type semiconductor light modulator according to Example 1, wherein modulation is performed with a modulation degree of 5 % and a frequency of 2.5 GHz. As shown in Fig. 6, a secondary mutual modulation distortion in the vicinity of an applied voltage of 2.25 V is reduced and has a minimum value of -57 dB which is less than that of the prior art by 7dB.

When the applied voltage is 2.25 V, the secondary mutual modulation distortion of the electric field absorption type semiconductor light modulator according to Example 1 has a minimum value. In applied voltage areas other than an area where the applied voltage is 2.25 V, the secondary mutual modulation distortion is smaller than that of the same applied voltage area according to the prior art. In addition, the secondary mutual modulation distortion is decreased in the applied voltage area having a wide range.

A comparison between the prior art and Example 1 will be described specifically. According to the prior art shown in Fig. 16, a secondary mutual modulation distortion of -35 dB to -30 dB is obtained in an applied voltage area for 0.61 V which is formed by adding an area where the applied voltage is 0.1 to 0.49 V to an area where the applied voltage is 0.68 to 0.9 V. According to Example 1 shown in Fig. 6, a secondary mutual modulation distortion of -45 dB to -42 dB is obtained in an area where the applied voltage is 0.4 to 2.0 V. According to Example 1, the secondary mutual modulation distortion is less than that of the prior art by about 10 dB in the applied voltage area which is about 2.6 times as large as that of the prior art.

An electric field absorption type semiconductor light modulator according to a second embodiment of the present invention will be described below.

The electric field absorption type semiconductor light modulator according to the second embodiment of the present invention comprises an active layer having a multi quantum well (MQW) structure in which a plurality of well layers and a plurality of barrier layers are formed sequentially. The well layer having the convex applied voltage - quenching ratio characteristic and the well layer having the concave applied voltage - quenching ratio characteristic are combined to form the MQW structure.

When the well layer having the convex applied voltage - quenching ratio characteristic and the well layer having the concave applied voltage - quenching ratio characteristic are combined, the convex portion of the applied voltage - quenching ratio characteristic is offset by the concave portion thereof. Consequently, the linearity of the applied voltage - quenching ratio characteristic is enhanced.

The electric field absorption type semiconductor light modulator according to the second embodiment will be described below.

(Example 2)

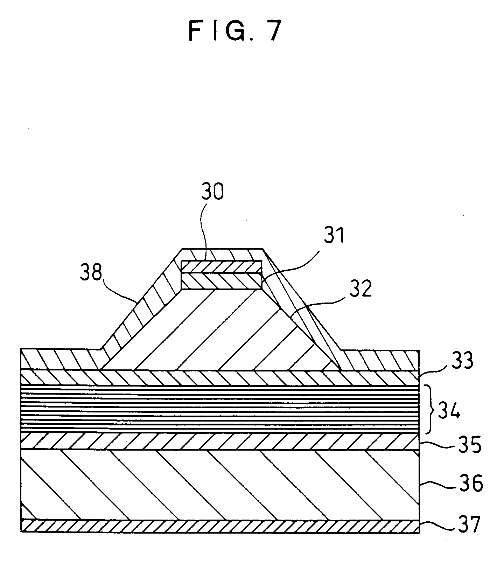

Fig. 7 shows the sectional structure of an electric field absorption type semiconductor light modulator according to Example 2 of the present invention. In Fig. 7, 30 designates a first electrode layer made of Au/Zn, 31 designates a p type InGaAsP layer having a thickness of 1000 $\mu$m, 32 designates a first clad layer made of p type InP which has a thickness of 9000 $\mu$m, 33 designates a first buffer layer made of non-doped InP which has a thickness of 1000 $\mu$m, 34 designates a MQW layer made of InGaAsP or InGaAs, 35 designates a second buffer layer made of n type InP which has a thickness of 1000 $\mu$m, 36 designates a second clad layer made of n type InP, 37 designates a second electrode layer made of Au/Sn, and 38 designates a SiN film. The first electrode layer 30 is electrically connected to a pad type electrode of 70 $\mu$m square (not shown) formed on the SiN film 38.

The element length of the electric field absorption type semiconductor light modulator according to Example 2 is 250 $\mu$m. An AR coat comprised of a SiO$_2$ film which has a thickness of 1.55 $\mu$m is formed on both end faces of a waveguide path. The SiO$_2$ film is formed on the side of the MQW layer 34.

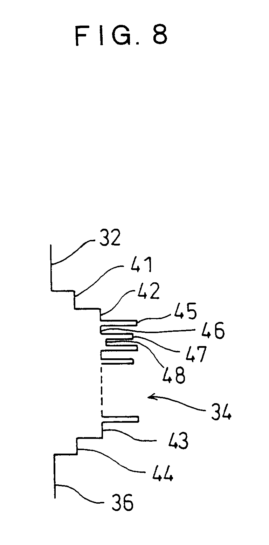

Fig. 8 is a conceptual diagram showing, in a PL wavelength, the layer structure of composition of the MQW layer 34 in the electric field absorption type semiconductor light modulator according to Example 2. First and second clad layers 32 and 36 are the same as in Fig. 7. In Fig. 8, 41 designates a first light waveguide layer made of InGaAsP which has a PL wavelength of 1.05 $\mu$m and a thickness of 50 nm, 42 designates a second light waveguide layer made of InGaAsP which has a PL wavelength of 1.15 $\mu$m and a thickness of 20 nm, 43 designates a third light waveguide layer having the same composition and thickness as those of the second light waveguide layer 42, and 44 designates a fourth light waveguide layer having the same composition and thickness as those of the first light waveguide layer 41. The first and second light waveguide layers 41 and 42, and the third and fourth light waveguide layers 43 and 44 form 2-stage SCH structures respectively.

In Fig. 8, 45 designates a first well layer made of InGaAsP which has a PL wavelength of 1.51 $\mu$m and a thickness of 7 nm, 46 designates a first barrier layer having a PL wavelength of 1.15 $\mu$m and a thickness of 10 nm, 47 designates a second well layer made of InGaAsP which has a PL wavelength of 1.41 $\mu$m and a thickness of 9 nm, and 48 designates a second barrier layer having a PL wavelength of 1.19 $\mu$m and a thickness of 8 nm. The 5 first well layers 45, 5 first barrier layers 46, 5 second well layers 47, and 4 second barrier layers 48 are alternately formed on the MQW layer 34.

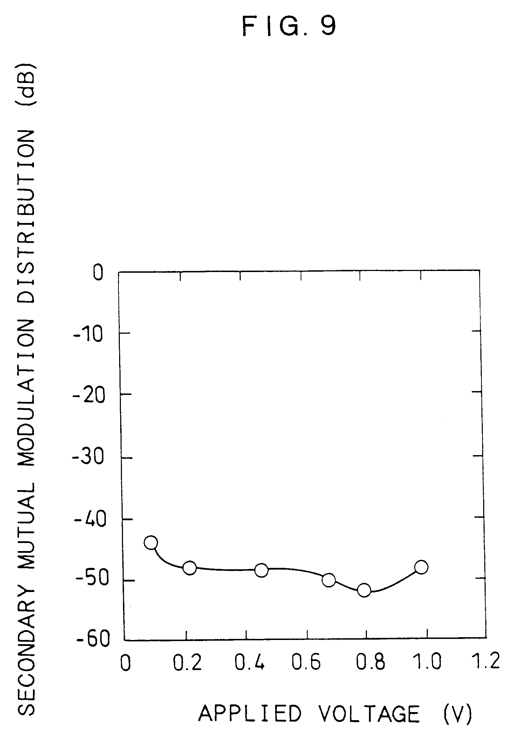

Fig. 9 shows the secondary mutual modulation distortion - applied voltage characteristic obtained when light having a constant intensity and a wavelength of 1.55 $\mu$m is incident on a waveguide path having the above structure and an electric field is applied in such a manner that the first electrode layer 30 is positive and the second electrode layer 37 is negative, wherein modulation is performed with a modulation degree of 5 % and a frequency of 2.5 GHz. As shown in Fig. 9, the secondary mutual modulation distortion has a minimum value of -52 dB which is less than that of the prior art by 2 dB.

In all applied voltage areas which are measured, the secondary mutual modulation distortion is distributed between -56 dB and -43 dB. According to Example 2, a quenching ratio of -40 dB is obtained with an applied voltage of 1.15 V.

According to the prior art, the applied voltage area where the secondary mutual modulation distortion has a minimum value is very small. In other applied voltage areas, the secondary mutual modulation distortion is very great.

According to the prior art shown in Fig. 16, a secondary mutual modulation distortion of -35 dB to -30 dB is obtained in an applied voltage area for 0.61 V which is formed by adding an area where the applied voltage is 0.1 to 0.49 V to an area where the applied voltage is 0.68 to 0.9 V. According to Example 2 shown in Fig. 9, a secondary mutual modulation distortion of -52 dB to -42 dB is obtained in an area where the applied voltage is 0.05 to 1.0 V. According to Example 2, the secondary mutual modulation distortion is less than that of the prior art by about 10 to 15 dB in the applied voltage area which is about 1.4 times as large as that of the prior art.

According to Example 2, the secondary mutual modulation distortion is not locally reduced. More specifically, the small secondary mutual modulation distortion is stably obtained in an area where the applied voltage is 0.05 to 0.95 V.

(Example 3)

Fig. 10 shows the sectional structure of an electric field absorption type semiconductor light modulator according to Example 3 of the present invention. In Fig. 10, 50 designates a first electrode layer made of Au/Zn, 51 designates a p type InGaAsP layer having a thickness of 1000 $\mu$m, 52 designates a first clad layer made of p type InP which has a thickness of 9000 $\mu$m, 53 designates a first buffer layer made of non-doped InP which has a thickness of 1000 $\mu$m, 54 designates a first MQW layer made of InGaAsP or InGaAs, 55 designates a second buffer layer made of n type InP which has a thickness of 1000 $\mu$m, 56 designates a second clad layer made of n type InP, 57 designates a second electrode layer made of Au/Sn, 58 designates a second MQW layer made of InGaAsP or InGaAs, and 59 designates a SiN film. The first electrode layer 50 is electrically connected to a pad type Au electrode 60 of 70 $\mu$m square on the SiN film 59 by an electric line 61 made of Au and a through electric contact 62 made of Au. The through electric contact 62 penetrates the SiN film 59 to electrically connect the electric line 61 to the first electrode layer 50.

The element length of the electric field absorption type semiconductor light modulator according to Example 3 is 270 $\mu$m. The lengths of the first and second MQW layers 54 and 58 in the direction of a waveguide path are 200 $\mu$m and 50 $\mu$m respectively. An AR coat comprised of a SiO$_2$ film which has a thickness of 1.55 $\mu$m is formed on both end faces of the waveguide path. The SiO$_2$ film is formed on the sides of the first and second MQW layers 54 and 58.

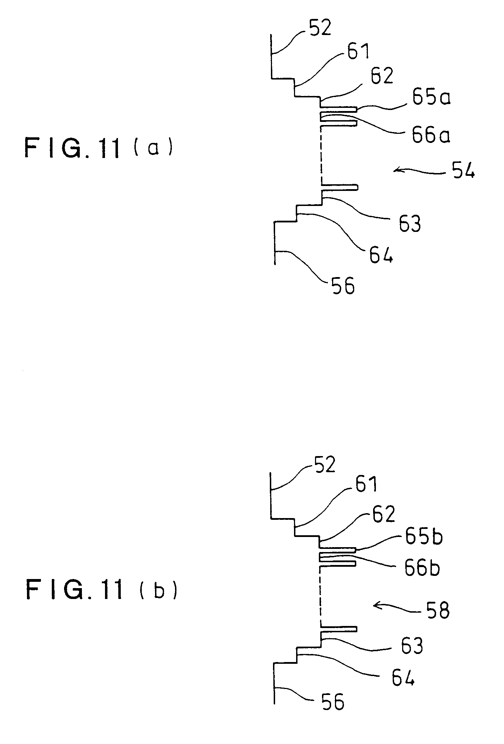

Fig. 11 (a) is a conceptual diagram showing, in a PL wavelength, the layer structure of composition of the first MQW layer 54 in the electric field absorption type semiconductor light modulator according to Example 3. First and second clad layers 52 and 56 are the same as in Fig. 10. In Fig. 11 (a), 61 designates a first light waveguide layer made of InGaAsP which has a PL wavelength of 1.05 $\mu$m and a thickness of 50 nm, 62 designates a second light waveguide layer made of InGaAsP which has a PL wavelength of 1.15 $\mu$m and a thickness of 20 nm, 63 designates a third light waveguide layer having the same composition and thickness as those of the second light waveguide layer 62, and 64 designates a fourth light waveguide layer having the same composition and thickness as those of the first light waveguide layer 61. The first and second light waveguide layers 61 and 62, and the third and fourth light waveguide layers 63 and 64 form 2-stage SCH structures respectively.

In Fig. 11 (a), 65a designates a first well layer made of InGaAsP which has a PL wavelength of 1.42 $\mu$m and a thickness of 8 nm, and 66a designates a first barrier layer having a PL wavelength of 1.15 $\mu$m and a thickness of 10 nm. The 10 first well layers 65a and 9 first barrier layers 66a are alternately formed on the first MQW layer 54.

Fig. 11 (b) is a conceptual diagram showing, in a PL wavelength, the layer structure of composition of the second MQW layer 58 in the electric field absorption type semiconductor light modulator according to Example 3. First and second clad layers 52 and 56 are the same as in Fig. 10. In Fig. 11 (b), 61 designates a first light waveguide layer made of InGaAsP which has a PL wavelength of 1.05 $\mu$m and a thickness of 50 nm, 62 designates a second light waveguide layer made of InGaAsP which has a PL wavelength of 1.15 $\mu$m and a thickness of 20 nm, 63 designates a third light waveguide layer having the same composition and thickness as those of the second light waveguide layer 62, and 64 designates a fourth light waveguide layer having the same composition and thickness as those of the first light waveguide layer 61. The first and second light waveguide layers 61 and 62, and the third and fourth light waveguide layers 63 and 64 form 2-stage SCH structures respectively. In Fig. 11 (b), 65b designates a second well layer made of InGaAsP which has a PL wavelength of 1.52 $\mu$m and a thickness of 7 nm, and 66b designates a second barrier layer having a PL wavelength of 1.1 $\mu$m and a thickness of 11 nm. The 10 second well layers 65b and 9 second barrier layers 66b are alternately formed on the second MQW layer 58.

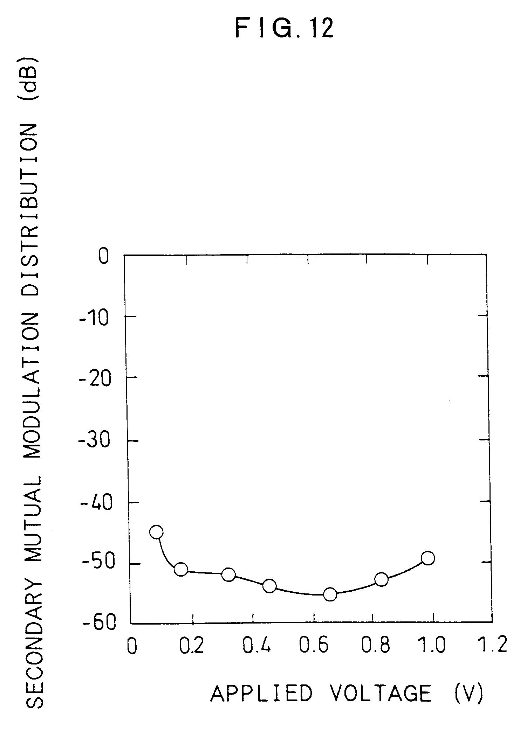

Fig. 12 shows the secondary mutual modulation distortion - applied voltage characteristic obtained when light having a constant intensity and a wavelength of 1.55 $\mu$m is incident on a waveguide path having the above structure and an electric field is applied in such a manner that the first electrode layer 50 is positive and the second electrode layer 57 is negative, wherein modulation is performed with a modulation degree of 5 % and a frequency of 2.5 GHz. As shown in Fig. 12, the secondary mutual modulation distortion in the vicinity of an applied voltage of 2.25V is reduced, and has a minimum value of -55 dB which is less than that of the prior art by 5 dB.

According to the prior art, the applied voltage area where the secondary mutual modulation distortion has a minimum value is very small. In other applied voltage areas, the secondary mutual modulation distortion is very great. According to the prior art shown in Fig. 16, a secondary mutual modulation distortion of -35 dB to -30 dB is obtained in an applied voltage area for 0.61 V which is formed by adding an area where the applied voltage is 0.1 to 0.49 V to an area where the applied voltage is 0.68 to 0.9 V. According to Example 3 shown in Fig. 12, a secondary mutual modulation distortion of -55 dB to -44 dB is obtained in an area where the applied voltage is 0.05 to 1.0 V. According to Example 3, the secondary mutual modulation distortion is less than that of the prior art by about 14 to 20 dB in the applied voltage area which is about 1.4 times as large as that of the prior art.

According to Example 3, the secondary mutual modulation distortion is not locally reduced. More specifically, the small secondary mutual modulation distortion is stably obtained in an area where the applied voltage is 0.05 to 0.95 V.

Although the present invention has fully been described by way of example with reference to the accompanying drawings, it is to be understood that various changes and modifications will be apparent to those skilled in the art. Therefore, unless otherwise such changes and modifications depart from the scope of the invention, they should be construed as being included therein.

## Claims

1. An electric field absorption type semiconductor light modulator comprising;
   an active layer having a multi quantum well structure in which a plurality of well layers and a plurality of barrier layers are formed sequentially,
   the peaks of the PL wavelengths of said plurality of well layers being set shorter than the wavelength of signal light by 0.1 μm or more, thereby enhancing the linearity of the applied voltage - quenching ratio characteristic.

2. An electric field absorption type semiconductor light modulator comprising;
   an active layer having a multi quantum well structure in which a plurality of well layers and a plurality of barrier layers are formed sequentially,
   said plurality of well layers being formed by the combination of the well layer having the convex applied voltage - quenching ratio characteristic and the well layer having the concave applied voltage - quenching ratio characteristic, thereby enhancing the linearity of the applied voltage - quenching ratio characteristic.

3. The electric field absorption type semiconductor light modulator of Claim 2, wherein said plurality of well layers are formed by the combination of well layers having different PL wavelengths in the direction of the thickness of the multi quantum well structure.

4. The electric field absorption type semiconductor light modulator of Claim 2, wherein said plurality of well layers are formed by the combination of well layers having different PL wavelengths in the direction of a waveguide path.

5. The electric field absorption type semiconductor light modulator of Claim 2, wherein said plurality of well layers are formed by the combination of well layers having different thicknesses in the direction of the thickness of the multi quantum well structure.

6. The electric field absorption type semiconductor light modulator of Claim 2, wherein said plurality of barrier layers are formed by the combination of barrier layers having different thicknesses in the direction of the waveguide path.

7. The electric field absorption type semiconductor light modulator of Claim 2, wherein said plurality of barrier layers are formed by the combination of barrier layers having different PL wavelengths in the direction of the thickness of the multi quantum well structure.

8. The electric field absorption type semiconductor light modulator of Claim 2, wherein said plurality of barrier layers are formed by the combination of barrier layers having different PL wavelengths in the direction of the waveguide path.

9. The electric field absorption type semiconductor light modulator of Claim 2, wherein said plurality of barrier layers are formed by the combination of barrier layers having different thicknesses in the direction of the thickness of the multi quantum well structure.

10. The electric field absorption type semiconductor light modulator of Claim 2, wherein said plurality of barrier layers are formed by the combination of barrier layers having different thicknesses in the direction of the waveguide path.

FIG. 1

# FIG. 2

FIG. 3

FIG. 4

# FIG. 5

FIG. 6

# FIG. 7

# F I G. 8

# F I G. 9

# FIG.10

FIG.11 (a)

FIG.11 (b)

EP 0 733 926 A2

FIG. 12

21

# FIG. 13

PRIOR ART

# FIG. 14

PRIOR ART

# FIG. 15

PRIOR ART

# F I G. 16

PRIOR ART